# EUROPEAN PATENT SPECIFICATION

(11) **EP 0 448 139 B1**
(45) Date of publication and mention of the grant of the patent: **14.08.1996**
(21) Application number: 91200317.5
(22) Date of filing: 15.02.1991
(51) Int. Cl.: G02F 1/1333

(54) **Device comprising a color filter**
Einrichtung mit Farbfilter
Dispositif à filtre chromatique

(30) Priority: 19.02.1990 NL 9000389
(43) Date of publication of application: 25.09.1991
(73) Proprietor: Philips Electronics N.V., 5621 BA Eindhoven (NL)
(72) Inventor: De Keyzer, Gerardus C. M., NL-5656 AA Eindhoven (NL); Raaijmakers, Antonius H. M., NL-5656 AA Eindhoven (NL); Baltussen, Petrus E. M., NL-5656 AA Eindhoven (NL); Luijben, Henricus G. J. A. M., NL-5656 AA Eindhoven (NL)
(74) Representative: Raap, Adriaan Yde

(56) References cited:
- EP-A- 0 410 387
- US-A- 4 853 296
- PATENT ABSTRACTS OF JAPAN, vol. 11, no. 399 (P-651)[2846], 26th December 1987; & JP-A-62 163 017
- PATENT ABSTRACTS OF JAPAN, vol. 14, no. 27 (P-992)[3970], 19t Januray 1990; & JP-A 1 267 517
- PATENT ABSTRACTS OF JAPAN, vol. 13, no. 125 (P-847)[3473], 28th March 1989; & JP-A-63 294 526
- PATENT ABSTRACTS OF JAPAN, vol. 10, no. 202 (P-477)[2258], 15th July 1986; & JP-A-61 43 727
- PATENT ABSTRACTS OF JAPAN, vol. 13, no. 112 (P-844)[3460], 17th March 1989; & JP-A-63 289 532

## Description

The invention relates to a device with a color filter in which said color filter is at least partly coated with a protection layer.

The invention further relates a method of manufacturing a device with a color filter in which said color filter is provided on a substrate and said color filter is at least partly coated with a protection layer which is subsequently cured.

A color filter as mentioned above may be used in electro-optical display devices such as, for example, a liquid crystal display device, but also, for example in charge-coupled devices for picking up pictures, etc. Such a color filter usually comprises a pattern of color pixels, but it may also comprise a so-called "black matrix".

A device with a color filter may, for example, be a liquid crystal display device as described in USP 4,744,637. This Patent describes a protection layer generally referred to a top coat, which has such a thermal coefficient of expansion that it is hardly roughened or undulated when electrodes are subsequently provided. Satisfactory results were notably achieved with a protection layer comprising SiO₂, whereas there was a considerable roughening if acrylic resins were used.

Particularly when used in liquid crystal display devices, this type of protection layer must satisfy a number of requirements.

For example, the protection layer must be resistant to subsequent manufacturing steps. The next step is, for example the provision of transparent conducting tracks such as indium tin oxide. The protection layer should be both resistant to the etching materials used and there should be no undulation of protection layer and/or color filter at the temperatures used. Temperatures used in this deposition of indium tin oxyde are preferably chosen to be high (180°-200°) because the ultimate resistivity of the conducting tracks is then minimal.

Moreover, said protection layer should be resistant to indentation by spacers which determine the thickness of the liquid crystal layer.

Furthermore, the protection layer should preferably not extend beyond the actual display portion because already other connection tracks may be present at the area on the substrate, for example, for chip-on-glass connection. It is therefore advantageous if the protection layer can be patterned. However, the protection layer should not cease abruptly because ruptures may then occur at the area of the edge in conductor tracks which extend beyond the edge. It is therefore desirous that the protection layer has at least one bevelled edge.

It is one of the objects of the invention to provide a method of manufacturing a device with a color filter which is at least partly coated by a protection layer by which said protection layer may readily be provided with at least one such bevelled edge.

To this end a device described in the opening paragraph is according to the invention characterized in that the protection layer comprises a cured acrylic resin and at at least one of its edges gradually decreases in thickness with a slope of a most 30°.

A method of the type described in the opening paragraph is according to the invention characterized in that the protection layer comprises an acrylic resin, in that the protection layer is patterned prior to curing and in that a waiting time of at least 5 minutes is observed between patterning and curing of said protection layer during which the protection layer acquires a bevelled slope at at least one of its edges.

The invention is based on the recognition that it is possible to provide a hard, scratch-resistant protection layer of polymerizable resin(s) by making use of flexographic pressing techniques or, for example stamping techniques.

In this respect it is to be noted that the use of a protection layer comprising an acrylic resin is known per se from EP-A-0,226,218. However, in this case thermosetting resins are concerned, while no mention is made of slanting edges.

Patterning protection layers is satisfactorily possible with, for example epoxy and polymide resins but the layers produced thereby are soft that they may be damaged by pressure of the spacers or they may be subject to a certain extent of indentation, which is position-dependent, resulting in thickness variations of the liquid crystal layer. Moreover, such layers are often less resistant to said subsequent process steps such as the provision of electrodes (temperature, etching liquid).

The protection layer decreases at its edge preferably with a slope which is smaller than 30°; in practice slopes of 1 to 2° can be realised.

Viewed throughout the trajectory, the protection layer outside the color filter may locally have a variation in its angle of inclination which may even extend in slightly opposite directions, dependent on the substrate and process parameters, although this oppositely varying slope is substantially always 2° or less.

Said protection layer, which is manufactured by polymerization of an acrylic resin, preferably has a pencil hardness of at least 4 H. The acrylic resins trimethylol propane triacrylate, n-vinyl pyrolidon, penta-erithrytol triacrylate or penta-erithrytol tetra-acrylate can be used for this purpose.

The substrate which is provided with a protection layer may also be used in electro-optical display devices other than liquid crystal display devices.

A special embodiment of the method according to the invention is characterized in that, after the substrate has been subjected to a cleaning step, it is provided with the protection layer material at the area of the color filter, which protection layer is patterned, whereafter the protection layer material is cured by means of UV radiation.

The cleaning step may be an oxygen plasma treatment of an UV ozone treatment.

The material can be patterned by making use of a flexographic pressing method or a stamp.

These and other aspects of the invention will now be described in greater detail and explained with reference to an embodiment and the drawing.

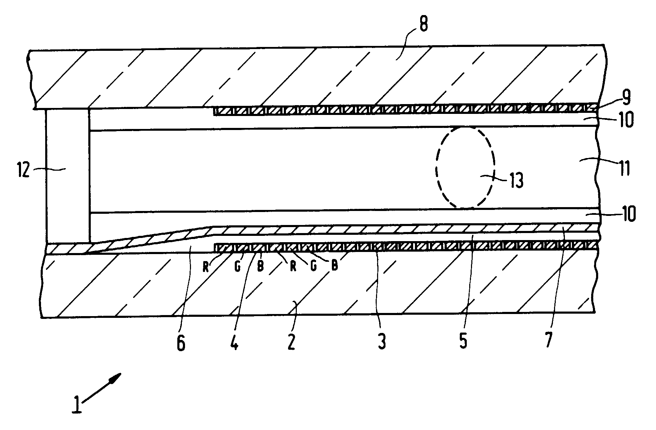

Fig. 1 shows diagrammatically a part of a display device manufactured by means of an embodiment of the method according to the invention.

The display device 1 of Figure 1 has a first supporting plate 2 of glass, quartz or another suitable material. A color filter 3, in this example comprising color cells 4 (red^{(r)}, green^{(b)}, blue^{(b)}), corresponding to pixels is provided on the supporting plate 2 by means of methods which are conventional in the liquid crystal technology. Moreover, the color filter may comprise a so-called "black matrix".

The color filter 3 is provided with a protection layer 5 which according to the invention consists of a polymerized acrylic resin and gradually decreases in thickness at the area of the edges (areas 6), for example with a slope of 1 to 2°. the manufacture of such a protection layer will hereinafter be described in greater detail.

The protection layer 5 is provided with a metallization pattern 7 consisting of, for example transparent indium tin oxide (ITO) electrodes. Before the metallization pattern is provided a thin layer of SiO₂ is deposited. Indium tin oxide can be deposited (and annealed if necessary) at a comparatively high temperature without undulation or roughening of the protection layer 5. Such a high deposition temperature leads to ITO electrodes having a very low resistance. Possible etching baths to be used for patterning the ITO layer do not attack the protection layer 5.

The device further comprises a second supporting plate 8 on which electrodes 9 are provided which define pixels, either because the electrodes 9 and the metallization pattern 7 constitute a cross-bar system in which the crossings define the pixels (passive drive), or because the electrodes 9 constitute picture electrodes which are driven by a system (not shown) of switching elements, drive and data lines (active drive); in the latter case the electrode 7 may have a single flat structure.

A layer of liquid crystal material 11 is present between the two supporting plates 2, 8 which, if necessary, are provided with protective/orienting layers 10. The two supporting plates are held at a substantially constant distance from each other by means of a sealing edge 12 and spacers 13. The device may be further provided with polarizers, reflectors, etc. in the conventional manner.

At the area of the edge (area 6) the protection layer gradually decreases in thickness so that the metallization 7 can be provided at this area without any risk of breakage due to a bad step coverage.

Since the protection layer 5, 6 is hard (and thus scratch-resistant), there is no risk of indentation of this layer at the area of spacers 13.

The protection layer 5, 6 is manufactured as follow. The basic material is, for example a glass plate on which the color filter 4 and, if desired, all other metallization tracks outside the actual display portion, for example for chip-on-glass assembly are provided. To ensure a satisfactory contact of these other metallization tracks, it is desirable to pattern the protection layer 5, 6.

For a satisfactory adhesion of the protection layer, substrate 2 and color filter 3 are cleaned in advance by means of, for example a short oxygen plasma treatment (10-20 seconds), but an UV/ozone treatment (0.5-10 minutes) is alternatively possible.

The protection layer 5 is subsequently provided by means of a flexographic pressing method. The material to be pressed, in this example acrylic resin, is provided on the glass plate via a rubber plate having the pattern to be provided. The acrylic resin (for example trimethylol propane triacrylate) comprises monomers and dimers in such ratio that this material has the correct viscosity to be pressed. To render the flexographic pressing method possible, no use is made of solvents. Possible auxiliary materials for the further pressing process may, however, be added (surfactants, UV initiator).

A stamp instead of the rubber plate may be used alternatively.

The maximum layer thickness immediately after pressing is 0,5-3 micrometers.

According to the invention the layer is subsequently left free for a short time (5 to 10 minutes), causing it to flow freely to a slight extent, which results in the slanting portions 6. Finally the layer 5, 6 is cured by means of UV radiation while excluding oxygen. The presence of oxygen leads to softening of the layer 5, 6 due to smaller polymerization and cross-linking of the polymers, with all the above-mentioned drawbacks. The acrylic resin thus obtained is found to be satisfactorily resistant to subsequent process steps manufacturing the display device (high temperatures, pressing, various etching liquids).

The invention is of course not limited to the example described, but several variations are possible. For example, other display devices which are not based on liquid crystal effects can be provided on such a substrate, while the protection layer can also be used in other color filters, for example for CCDs.

## Claims

1. A method of manufacturing a device with a color filter in which said color filter is provided on a substrate and said color filter is at least partly coated with a protection layer which is subsequently cured, characterized in that the protection layer comprises an acrylic resin, in that the protection layer is patterned prior to curing and in that a waiting time of at least 5 minutes is observed between patterning and curing of said protection layer during which the protection layer acquires a bevelled slope at at least one of its edges.

2. A method as claimed in claim 1, characterized in that the protection layer is provided in the desired pattern by means of a flexographic pressing process or a stamping technique.

3. A method as claimed in claim 1 or 2, characterized in that the protection layer is cured in an inert atmosphere by means of UV-radiation.

4. A method as claimed in claim 1, 2 or 3, characterized in that the material of the protection layer is chosen from a group comprising tri-methylolpropane-triacrylate, n-vinylpyrolidon, penta-erithrytoltri-acrylate and penta-erithrytoltetra-acrylate.

5. A method as claimed in claim 1 in which the device constitutes a first supporting plate of an electro-optical display device, characterized in that the supporting plate is sealed to a second supporting plate of an electro-optical display device closing in a certain gap and in that the gap is filled with an electro-optical medium, particularly with a liquid crystalline material.

6. A device with a color filter in which said color filter is provided on a substrate and said color filter is at least partly coated with a protection layer, characterized in that the protection layer comprises a cured acrylic resin and at at least one of its edges gradually decreases in thickness with a slope of at most 30°.

7. An electro-optic display device comprising a display medium between two substrates comprising a color filter in which said color filter is provided on a substrate and said color filter is at least partly coated with a protection layer, characterized in that the protection layer comprises a cured acrylic resin and at at least one of its edges gradually decreases in thickness with a slope of at most 30°.

8. A device according to Claims 6 or 7 characterized in that the protection layer is provided with a metallization pattern.

9. A device according to claims 6 to 8 characterized in that the material of the protection layer is chosen from a group comprising tri-methylol propane-triacrylate, penta-erithrytol tri-acrylate and penta-erithrytol tetra-acrylate.

## Patentansprüche

1. Verfahren zum Herstellen einer Einrichtung mit einem Farbfilter, in dem das Farbfilter auf einem Substrat angebracht und wenigstens teilweise mit einer Schutzschicht bedeckt ist, die anschließend ausgehärtet wird, dadurch gekennzeichnet, daß die Schutzschicht ein Acrylharz enthält, das die Schutzschicht vor dem Aushärten gemustert wird, und daß eine Wartezeit von wenigstens 5 Minuten zwischen dem Mustern und Aushärten der Schutzschicht eingehalten wird, wobei in dieser Zeit die Schutzschicht eine schräge Flanke an wenigstens einem ihrer Ränder erhält.

2. Verfahren nach Anspruch 1, dadurch gekennzeichnet, daß die Schutzschicht im gewünschten Muster mittels eines flexographischen Preßverfahrens oder einer Stanztechnik angebracht wird.

3. Verfahren nach Anspruch 1 oder 2, dadurch gekennzeichnet, daß die Schutzschicht in einer inerten Atmosphäre mittels UV-Strahlung ausgehärtet wird.

4. Verfahren nach Anspruch 1, 2 oder 3, dadurch gekennzeichnet, daß das Material der Schutzschicht aus einer Gruppe mit Trimethylolpropantriacrylat, n-Vinylpyrolidon, Penta-Erithrytoltriacrylat und Penta-Erithrytoltetraacrylat gewählt wird.

5. Verfahren nach Anspruch 1, mit dem die Anordnung eine erste Trägerplatte einer elektrooptischen Wiedergabeanordnung bildet, dadurch gekennzeichnet, daß die Trägerplatte abschließend auf einer zweiten Trägerplatte einer elektrooptischen Wiedergabeanordnung angebracht wird, wobei ein bestimmter Spalt geschlossen wird, und daß der Spalt mit einem elektrooptischen Medium, insbesondere mit einem flüssigkristallinen Material ausgefüllt wird.

6. Einrichtung mit einem Farbfilter, in der das Farbfilter auf einem Substrat angebracht und wenigstens teilweise mit einer Schutzschicht bedeckt ist, dadurch gekennzeichnet, daß die Schutzschicht ein ausgehärtetes Acrylharz enthält und an wenigstens einem ihrer Ränder mit einer Schräge von höchstens 30° allmählich dünner wird.

7. Elektrooptische Wiedergabeanordnung mit einem Wiedergabemedium zwischen zwei Substraten mit einem Farbfilter, in der das Farbfilter auf einem Substrat angebracht und wenigstens teilweise mit einer Schutzschicht bedeckt ist, dadurch gekennzeichnet, daß die Schutzschicht ein ausgehärtetes Acrylharz enthält und an wenigstens einem ihrer Ränder mit einer Schräge von höchstens 30° allmählich dünner wird.

8. Anordnung nach Anspruch 6 oder 7, dadurch gekennzeichnet, daß die Schutzschicht mit einem Metallisierungsmuster versehen ist.

9. Anordnung nach Anspruch 6 bis 8, dadurch gekennzeichnet, daß das Material der Schutzschicht aus einer Gruppe mit Trimethylolpropantriacrylat, Penta-Erithrytoltriacrylat und Penta-Erithrytoltetraacrylat gewählt ist.

## Revendications

1. Procédé pour la fabrication d'un dispositif à filtre chromatique, selon lequel ledit filtre chromatique est appliqué sur un substrat et ledit filtre chromatique est au moins partiellement recouvert d'une couche de protection qui est ensuite durcie, caractérisé en ce que la couche de protection est constituée par une résine acrylique, en ce que la couche de protection est configurée avant le durcissement et en ce qu'une durée d'attente d'au moins 5 minutes est observée entre la configuration et le durcissement de ladite couche de protection, période pendant laquelle la couche de protection acquiert une pente chanfreinée à au moins l'un de ses bords.

2. Procédé selon la revendication 1, caractérisé en ce que la couche de protection est appliquée dans la configuration désirée à l'aide d'un processus de pressage flexographique ou d'une technique d'estampage.

3. Procédé selon la revendication 1 ou 2, caractérisé en ce que la couche de protection est durcie dans une atmosphère inerte à l'aide de rayonnement ultra-violet.

4. Procédé selon la revendication 1, 2 ou 3, caractérisé en ce que le matériau de la couche de protection est choisi dans le groupe constitué par le triacrylate de triméthylolpropane, la n vinylpyrrolidone, le triacrylate de penta-érithrytol et le tétra-acrylate de penta-érithrytol.

5. Procédé selon la revendication 1 selon lequel le dispositif constitue une première plaque de support d'un dispositif d'affichage électro-optique, caractérisé en ce que la plaque de support est fixée à une deuxième plaque de support d'un dispositif d'affichage électro-optique fermant une certaine ouverture et en ce que l'ouverture est remplie d'un fluide électro-optique, notamment d'un matériau cristallin liquide.

6. Dispositif à filtre chromatique, dans lequel ledit filtre chromatique est appliqué sur un substrat et ledit filtre chromatique est au moins partiellement recouvert d'une couche de protection, caractérisé en ce que la couche de protection est constituée par une résine acrylique durcie et au moins l'un des ses bords diminue progressivement en épaisseur à une pente d'au maximum 30°.

7. Dispositif d'affichage électro-optique comprenant un fluide d'affichage entre deux substrats comportant un filtre chromatique, dans lequel ledit filtre chromatique est appliqué sur un substrat et ledit filtre chromatique est au moins partiellement recouvert d'une couche protectrice, caractérisé en ce que la couche de protection est constituée par une résine acrylique durcie et au moins l'un de ses bords diminue progressivement en épaisseur à une pente d'au maximum 30°.

8. Dispositif selon la revendication 6 ou 7, caractérisé en ce que la couche de protection est munie d'une configuration de métallisation.

9. Dispositif selon les revendications 6 à 8, caractérisé en ce que le matériau de la couche de protection est choisi dans le groupe comprenant le triacrylate de triméthylolpropane, le triacrylate de pentaérithrytol et le tétra-acrylate de penta-érithrytol.
